# EUROPEAN PATENT SPECIFICATION

(11) **EP 1 473 093 B1**
(45) Date of publication and mention of the grant of the patent: **18.10.2006**
(21) Application number: 02788822.1
(22) Date of filing: 13.12.2002
(51) Int. Cl.: B09C 1/10

(54) **METHOD OF PURIFYING CONTAMINATED SOIL USING MICROORGANISM**
VERFAHREN ZUM REINIGEN VON KONTAMINIERTEM BODEN UNTER VERWENDUNG VON MIKROORGANISMEN
PROCEDE D'EPURATION DE SOLS CONTAMINES A L'AIDE D'UN MICRO-ORGANISME

(30) Priority: 17.01.2002 JP 2002008367
(43) Date of publication of application: 03.11.2004
(73) Proprietor: Toyota Jidosha Kabushiki Kaisha, Toyota-shi, Aichi 471-8571 (JP)
(72) Inventor: Fujii, Kensuke, Obayashi Corp. Techn. Res. Inst., Kiyose-shi, Tokyo 204-8558 (JP); Ide, Kazuki, Obayashi Corp. Techn. Research Inst., Kiyose-shi, Tokyo 204-8558 (JP); Ishikawa, Yoji, Obayashi Corp. Techn. Res. Inst., Kiyose-shi, Tokyo 204-8558 (JP); Oda, Yasushi, Toyota-shi, Aichi 471-8571 (JP); Hamazaki, Motoki, Toyota-shi, Aichi 471-8571 (JP)
(74) Representative: Kuhnen & Wacker
(86) International application number: PCT/JP2002/013065
(87) International publication number: WO 2003/059544

(56) References cited:
- WO-A1-94/25628
- DE-A- 4 243 627
- JP-A- 7 188 659
- JP-A- 8 112 586
- JP-A- 2001 081 464
- JP-A- 2001 232 344

## Description

### TECHNICAL FIELD

The present invention relates to a method of purifying contaminated soil by purifying contaminants such as a chlorinated organic compound contained in such contaminated soil.

### BACKGROUND OF THE INVENTION

Soil may contain chlorinated organic compounds such as trichloroethylene, and petroleum hydrocarbons such as heavy oil, gasoline or the like. If such soil is left as it is, there is a concern that contaminants including the above-described chlorinated organic compounds and the like may spread throughout the environment via underground water and the like. Hence, such contaminated soil must be treated with certain purification steps.

In the meantime, studies have progressed on bioremediation, which is technology used to degrade contaminants in the environment and to make them harmless utilizing the activity of microorganisms. Bioremediation has so far been applied to the purification of marine pollution or the like resulting from crude oil, and it is currently being applied in the purification of contaminated soil.

General procedures to purify contaminants in contaminated soil using bioremediation comprise digging out contaminated soil, transferring the dug-out contaminated soil to a temporary site, degrading the contaminants within the dug-out contaminated soil by microorganisms at the temporary site, and then returning the treated soil to its original location after the contaminants have been degraded.

DE-A-42 43 627 discloses open-pored mineral bulk material with microorganisms immobilised thereon, the manufacture and the use of the same. Disclosed are open-pored mineral bulk materials like expanded clay, lava, perlite, tile or brick chippings, or mixtures of the same and a process to immobilise microorganisms thereon. Also a method for decontaminating contaminated materials is described.

### SUMMARY OF THE INVENTION

However, contaminated soil rich in fine grains such as silt or clay contains a low proportion of the gas phase, because such soil is rich in pore water, in addition to having fewer vacant spaces. Since the barely existing vacant spaces do not have any continuity, the gas permeability of such contaminated soil is extremely poor.

Accordingly, even forced aeration is unable to enhance the activity of aerobic degradation microbes. Thus it takes a long time to degrade contaminants in contaminated soil, and under certain circumstances the fact that microbial degradation itself becomes substantially impossible has been problematic.

A method that has been studied and developed comprises mixing burnt lime with contaminated soil, agitating the soil to generate heat of hydration along with the chemical reaction of water contained in the contaminated soil with the burnt lime, and treating the contaminants by evaporation utilizing the heat of hydration (see JP Patent Publication (Kokai) No. 7-275837 A (1995)). With such a method, contaminated soil is strongly alkalized by burnt lime. There is a concern that after soil has been returned to its original location, the alkaline component thereof would spread to underground water or the like, or adversely affect ecological systems.

The present invention has been completed in consideration of the above circumstances. An object of the present invention is to provide a method of purifying contaminated soil by microorganisms, which allows efficient purification even when the soil is highly viscous, without affecting the environment or necessitating the performance of any post-treatments such as pH adjustment that would be used to prevent environmental impact.

### [Means for Solving the Problems]

To achieve the above objective, as described in claim 1, the method of purifying contaminated soil by microorganisms according to the present invention comprises adding a soil-improving material having water-absorbing properties and being capable of maintaining a non-swelling property and non-viscosity after water absorption to contaminated soil containing clay or silt, and then mixing the soil by agitation, so as to cause the soil-improving material to absorb pore water contained in the aforementioned clay or silt, while adding microbes that degrade contaminants contained in the aforementioned contaminated soil to the aforementioned contaminated soil, or utilizing degradation microbes inhabiting the aforementioned contaminated soil, thereby microbially degrading the aforementioned contaminants.

Furthermore, in the method of purifying contaminated soil by microorganisms according to the present invention, the aforementioned degradation microbes are added to the aforementioned contaminated soil, while not being contained by the aforementioned soil-improving material.

Furthermore, in the method of purifying contaminated soil by microorganisms according to the present invention, aeration is performed for the aforementioned contaminated soil when the aforementioned contaminant is microbially degraded.

Furthermore, in the method of purifying contaminated soil by microorganisms according to the present invention, the aforementioned soil-improving material is an inorganic soil-improving material.

Furthermore, in the method of purifying contaminated soil by microorganisms according to the present invention, the aforementioned inorganic soil-improving material is perlite.

In the method of purifying contaminated soil by microorganisms according to the present invention, first the soil-improving material is added to contaminated soil containing clay or silt, and then the soil is mixed by agitation, thereby causing the soil-improving material to absorb pore water contained in the aforementioned clay or silt.

Contaminated soil containing clay or silt, particularly contaminated soil that mainly comprises clay or silt or consists only of clay or silt, has few vacant spaces that often contain pore water, so that such soil has generally a high water content ratio. When the water content ratio of fine-grained soil such as clay or silt is gradually decreased from that of the same in the form of slurry, the consistency of the soil against deformation changes along with the decrease. Specifically, the nature of the soil changes sequentially from being a liquid sludge, to being plastic body, to being a semisolid, and to being a solid. That is, the fine-grained soil changes from being a liquid sludge at the liquid limit to being in a state showing plasticity, and further changes from being in a state showing plasticity at the plastic limit to a state showing a semisolid nature. When the soil reaches a state having a water content ratio at the plastic limit or less, it shows a high shear strength, but becomes non-plastic. In addition, "plasticity" means the ability of soil to remain deformed when an external force acting on the soil is removed.

Accordingly, a soil-improving material having water-absorbing properties and being capable of maintaining a non-swelling property and non-viscosity after water absorption is added to contaminated soil containing clay or silt, and then mixed by agitation so as to cause the soil-improving material to absorb pore water contained in the clay or silt. Although the water content ratio of the entire soil does not change, the water content ratio of the clay or silt itself in the contaminated soil decreases because the pore water contained in the clay or silt transfers to the soil-improving material. Thus the clay or silt changes from having the property of a plastic body to having the property of a non-plastic semisolid. Moreover, clods of the clay or silt are peptized apart by mixing the soil by agitation under such circumstances, so that the soil structure changes from an initial small crumbed structure to a larger crumbed structure. Along with this change, larger voids come to be formed. Together with the above-described vacant spaces secured by the absorbance of pore water, the gas phase rate within the clay or silt is greatly improved.

In the meantime, microbes which degrade contaminants contained in the above contaminated soil are added to the above contaminated soil, or degradation microbes inhabiting the above contaminated soil are used, thereby microbially degrading the above contaminants.

The gas phase rate within the clay or silt is improved by the above method. Hence, an aerobic environment is formed within the contaminated soil, so that contaminants contained in the contaminated soil are rapidly degraded by degradation microbes with the thus enhanced activity or degradation enzymes previously accumulated in the soil. In addition, when degradation microbes are added to contaminated soil, it is preferred that the degradation microbes are uniformly distributed within the contaminated soil, and the soil is mixed by agitation even after the addition of the degradation microbes to enhance the contact with contaminants.

The soil-improving material and degradation microbes are added to contaminated soil at any time. They may be added simultaneously or either one of them may be added earlier. For example, the soil-improving material may be added, and then the soil may be mixed by agitation, so as to form an aerobic environment first. Next, the degradation microbes may be added, followed by mixing by agitation.

However, it has been confirmed by our experimentation that the gas phase rate begins to increase after the start of mixing by agitation, but it reaches a peak at some point and then decreases again, depending on conditions such as the water content ratio. Accordingly, depending on the situation, it is preferred that after the simultaneous addition of the soil-improving material and the degradation microbes, the contaminated soil be mixed by agitation, and then the mixing be terminated at the time when the gas phase rate reaches the maximum rate.

The soil-improving material may be any material, as long as it has water-absorbing properties and is capable of maintaining a non-swelling property and non-viscosity after water absorption as described above. Examples of the soil-improving material include perlite materials such as perlite, fluolite perlite or expanded hard rhyolite; ceramic materials such as the baked grains of diatomaceous earth, baked clay mineral or charcoal/regenerated wood coal; and baked rocks materials such as vermiculite or rock wool.

In addition, the reason why a non-swelling property is a requirement herein is that vacant spaces secured by water absorption are canceled by the volume increased through the swelling of the soil-improving material. There is a need to select a material for which the increase in volume due to swelling is smaller than the volume of the vacant spaces secured by water absorption. A specific example of a material which does not satisfy the requirement of non-swelling nature is bentonite.

Furthermore, the reason why non-viscosity after water absorption is a requirement herein is the presence of a concern that a soil-improving material itself could come to have viscosity as a result of water absorption, whereby the entire contaminated soil would show the property of a plastic body. There is a need to select a soil-improving material which does not prevent contaminated soil from changing its property from plasticity to non-plastic, semi-solid property as a result of water absorption, when the material itself has viscosity so as to decrease the plastic limit. A specific example of a material which does not satisfy such a requirement of non-viscosity is a polymer.

In addition, the soil-improving material according to the present invention is commercially available at the time of filing or is a known material as described above. These materials are manufactured with the purpose of improving the water-holding ability of soil. Most of them are targeted at sandy soil having poor water-holding ability, and are completely different from the present invention in terms of purposes and applications.

Target contaminants include all the contaminants that can be degraded by microorganisms under an aerobic environment. Optimum degradation microbes may be selected in accordance with the nature of such contaminants.

For example, if a contaminant is crude oil or the like, which exists in nature, a microorganism that inhabits soil at a high frequency such as the bacterial cells of the genus *Pseudomonas* can be used intact. In addition, when microbial cells capable of degrading contaminants are present in contaminated soil in a small number, microorganisms capable of degrading target contaminants may be isolated by screening from microorganisms inhabiting another natural environment, and then bred.

Furthermore, when a contaminant is an artificially-synthesized organic solvent such as trichloroethylene, and it is difficult to obtain a microorganism capable of directly degrading this solvent as a sole carbon source, co-metabolism that is an action to cause additional degradation when another substance is degraded may be utilized. One example of a method that may be employed in this case is a method which involves, upon aeration, supplying methane together with air, so as to activate methane-assimilating bacteria that are present in soil or separately supplied to the soil, and then degrading the above organic solvent using oxygenase of the bacteria. Another method involves separately adding an aromatic compound such as phenol or toluene to contaminated soil, so as to cause aromatic compound-assimilating bacteria (there are many such bacteria among the bacteria of the genus *Pseudomonas*) that are present in the contaminated soil or separately supplied to the soil to degrade the aromatic compound, and then degrading the organic solvent by the co-metabolism at such time. In addition, the above methane or aromatic compound is referred to as a co-metabolite in this specification.

Other examples of known microbes capable of microbially degrading trichloroethylene include, with some of the examples overlapping the above content: methane-assimilating bacteria such as *Methylosinus tricosporium* OB3 (JP Patent Publication (Kohyo) No. 4-501667 A (1992) and JP Patent Publication (Kokai) No. 5-212371 A (1993)) or *Methylosinus tricosporium* TUKUBA (JP Patent Publication (Kokai) Nos. 2-92274 A (1990) and 3-292970 A (1991)); bacteria of the genus *Pseudomonas,* such as *Pseudomonas putida* F1 (JP Patent Publication (Kokai) No. 64-34499 A (1989)), *Pseudomonas putida* BH (Fujita et al., Chemical Engineering 39, 6, pp494-498, 1994), *Pseudomonas putida* UC-R5 or UC-P2 (JP Patent Publication (Kokai) No. 62-84780 A (1987)), *Pseudomonas putida* KWI-9 (JP Patent Publication (Kokai) No. 6-70753 A (1994)), *Pseudomonas mendocina* KR1 (JP Patent Publication (Kokai) Nos. 2-503866 A (1990) and 5-502593 A (1993)), *Pseudomonas cepacia* G4 (JP Patent Publication (Kokai) No. 4-502277 A (1992)) or *Pseudomonas cepacia* KK01 (JP Patent Publication (Kokai) No. 6-296711 A (1994)); *Alcaligenes eutropus* JMP134 (A. R. Harker Appl. Environ. Microbiol., 56, 4, 1179-1181, 1990) or *Alcaligenes eutropus* KS01 (JP Patent Publication (Kokai) No. 7-123976 A (1995)); ammonium-oxidizing bacteria such as *Nitrosomonus europaea* (D. Arciero et al. Biochem. Biophys. Res. Commun., 159, 2, 640-643, 1989); and bacteria of the genus Corynebacterium J1 (JP Patent Publication (Kokai) No. 8-66182 A (1996)).

Moreover, by the use of the MO7 strain (International Application No. PCT/JP97/02872 and International Publication No. WO 98/07831, FERM BP-5624), trichloroethylene can be degraded directly at a higher efficiency compared with the above bacteria.

Here, contaminant-degrading microbes that have been separately screened for as described above may be added to contaminated soil, or soil microbes originally inhabiting contaminated soil can be used as degradation microbes.

Furthermore, when degradation microbes are added to contaminated soil, the degradation microbes may be added to contaminated soil together with a soil-improving material while being contained by the soil-improving material. Instead, degradation microbes, which are not contained by a soil-improving material, may preferably be added to contaminated soil. Specifically, degradation microbes may preferably be added to contaminated soil separately in a process independent from the process of adding a soil-improving material to contaminated soil. Such a constitution makes it possible to prevent degradation microbes from being placed under a non-aerobic environment because of water absorbed by the soil-improving material, unlike the case wherein degradation microbes are added to contaminated soil while being contained by the soil-improving material.

Moreover, when the above contaminants are microbially degraded, it can be optionally chosen to perform or not to perform aeration for the above contaminated soil. When aeration is performed, the above-described aerobic environment is formed with further certainly, which enables a further increase in the degradation efficiency of contaminants.

Moreover, the use of an inorganic soil-improving material as the above soil-improving material enables the prevention of the soil-improving material from being degraded over a period of years, causing subsidence of ground or the like.

Furthermore, the use of perlite as the above inorganic soil-improving material enables the certain formation of an aerobic environment.

### BRIEF DESCRIPTION OF DRAWINGS

Fig. 1 is a flow chart showing procedures for implementing the method of purifying contaminated soil by microorganisms according to the present embodiment.
Fig. 2 shows operation at each implementation step of the method of purifying contaminated soil by microorganisms according to the present embodiment.
Fig. 3 is a flow chart showing procedures for implementing the method of purifying contaminated soil by microorganisms according to a modified example.
Fig. 4 is a graph which demonstrates the method of purifying contaminated soil by microorganisms according to the present invention.
Fig. 5 is also a graph which demonstrates the method of purifying contaminated soil by microorganisms according to the present invention.

### Explanation of symbols

1 Contaminated soil
2 Perlite (soil-improving material, inorganic soil-improving material)
3 Degradation microbe

### BEST MODE FOR CARRYING OUT THE INVENTION

The embodiments of the method of purifying contaminated soil by microorganisms according to the present invention are described below by referring to attached drawings. In addition, for parts and the like which are substantially the same as those of the prior art, the same symbols are given in order to omit the need for explanation.

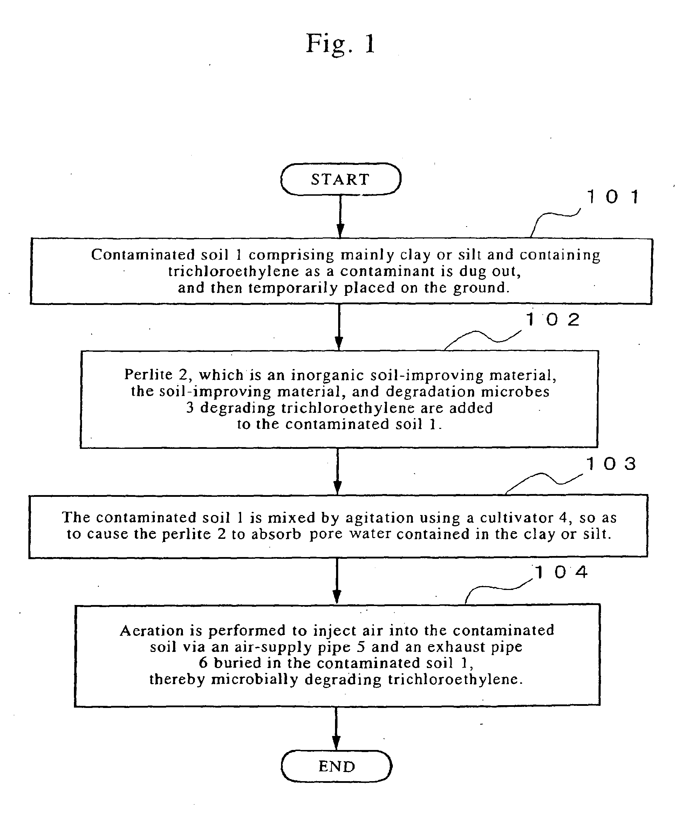

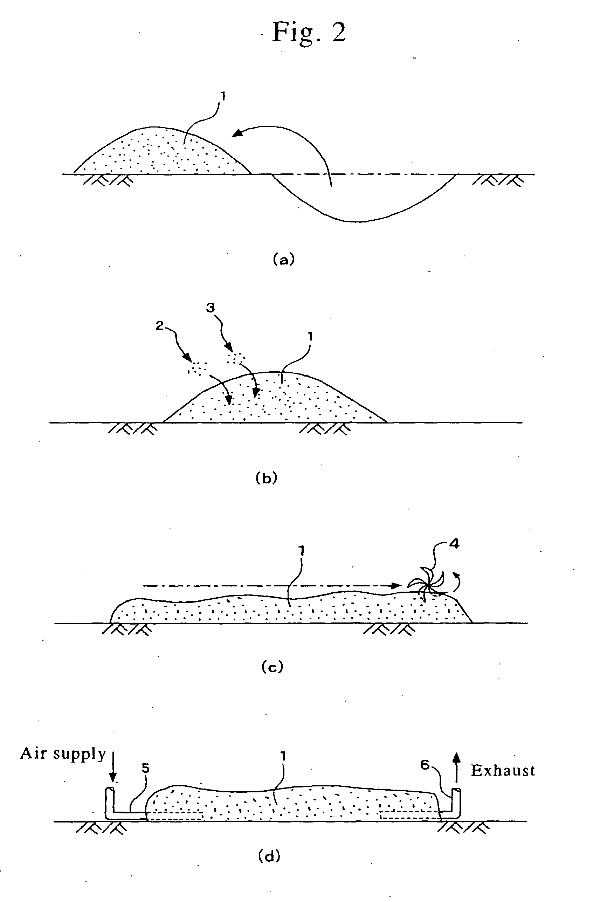

Fig. 1 is a flow chart showing procedures for implementing the method of purifying contaminated soil by microorganisms according to the present embodiment, and Fig. 2 shows operations at each step. As shown in these figures, in the method of purifying contaminated soil by microorganisms according to the present embodiment, contaminated soil 1 mainly comprising clay or silt and containing trichloroethylene as a contaminant is dug out as shown in Fig. 2 (a), and then temporarily placed on the ground (step 101).

Next, perlite 2, which is an inorganic soil-improving material, the soil-improving material, and microbes 3 that degrade trichloroethylene are added to the contaminated soil 1 as shown in Fig. 2 (b) (step 102).

When the degradation microbes 3 are added to the contaminated soil 1, the degradation microbes 3 are added while not being contained by the perlite 2. Specifically, the degradation microbes 3 are individually added to the contaminated soil 1 in a process independent from the process of adding the perlite 2 to the contaminated soil 1.

Next, the contaminated soil is mixed by agitation using a cultivator 4 as shown in Fig. 2(c), thereby causing the perlite 2 to absorb pore water contained in the clay or silt (step 103).

As a result, while the water content ratio of the entirety of the contaminated soil 1 does not change, the water content ratio of the clay or silt itself in the contaminated soil 1 decreases because pore water contained in the clay or silt transfers to the perlite 2, the soil-improving material. Thus the clay or silt changes from having the property of a plastic body to having the property of a non-plastic semisolid. Clods of the clay or silt are peptized apart by mixing the soil by agitation under such circumstances, so that the soil structure changes from an initial small crumbed structure to a larger crumbed structure. Along with this change, larger voids become to be formed. Together with the above-described vacant spaces secured by the absorbance of pore water, the gas phase rate within the clay or silt is greatly improved. Furthermore, the degradation microbes 3 uniformly distributed within the contaminated soil 1 lead to enhanced contact with trichloroethylene.

Degradation microbes 3, such as the MO7 strain (International Application No. PCT/JP97/02872 and International Publication No. WO98/07831, FERM BP-5624) may be stored in a cell suspension tank, and then added to the contaminated soil 1. In addition, to enhance the activity of the degradation microbes 3, nutrient salts, co-metabolites or the like may be supplied at the same time if necessary.

Next, as shown in Fig. 2 (d), aeration is performed to inject air into the contaminated soil 1 via an air-supply pipe 5 and an exhaust pipe 6 buried in the contaminated soil 1, thereby microbially degrading trichloroethylene (step 104). During such aeration (curing), to secure the contact between trichloroethylene and degradation microbes, the contaminated soil 1 may be agitated whenever necessary.

Thus, the gas phase rate in the clay or silt is improved by injecting air into the contaminated soil 1 as described above. Aeration is performed smoothly within the contaminated soil 1 and an aerobic environment is formed with greater certainty, thereby rapidly degrading the trichloroethylene contained in the contaminated soil 1 by means of degradation enzymes produced by the degradation microbes.

To perform aeration, or to inject air, oxygen concentration, gas temperature and the like are appropriately set in consideration of optimum conditions for the growth of trichloroethylene-degrading microbes when necessary, while a co-metabolite such as methane is supplied at the same time when necessary.

In addition, since trichloroethylene is a volatile substance, it can be exhausted without being degraded by degradation microbes. In such a case, the exhaust pipe 6 buried in the contaminated soil 1 may be connected to a collector (not shown), and then trichloroethylene within the exhausted air is collected by adsorption using activated carbon provided within the collector.

Moreover, to prevent volatilization of trichloroethylene during aeration (curing), a volatilization-preventing sheet such as a vinyl sheet may be placed over the contaminated soil 1 that has been temporarily placed on the ground.

When the degradation and removal of trichloroethylene is completed by microbial degradation, the treated soil can be appropriately placed back in the original location or can be appropriately diverted to materials such as materials for use in embankments or earth filling materials.

As described above, according to the method of purifying contaminated soil by microorganisms in the present embodiment, the perlite 2, the soil-improving material, and the trichloroethylene-degrading microbes 3 are added to the contaminated soil 1 containing clay or silt, and then mixed by agitation, thereby causing the perlite to absorb pore water contained in the clay or silt. While the water content ratio of the entirety of the contaminated soil 1 does not change, the water content ratio of the clay or silt itself decreases because pore water contained in the clay or silt transfers to the perlite 2. Thus the clay or silt changes from having the property of a plastic body to having the property of a non-plastic semisolid. Moreover, clods of the clay or silt are peptized apart by mixing the soil by agitation under such circumstances, so that the soil structure changes from an initial small crumbed structure to a larger crumbed structure. Along with this change, larger voids come to be formed.

Together with the above-described vacant spaces secured by the absorbance of pore water, the gas phase rate within the clay or silt is greatly improved. Hence, an aerobic environment is formed within the contaminated soil 1, which enables rapid degradation of trichloroethylene contained in the contaminated soil 1 by degradation enzymes produced by the degradation microbes 3.

Furthermore, according to the method of purifying contaminated soil by microorganisms in the present embodiment, the degradation microbes 3 are added to the contaminated soil while not being contained by the perlite 2. Specifically, the degradation microbes 3 are added individually to the contaminated soil 1 in a process independent from the process of adding the perlite 2 to the contaminated soil 1. This makes it possible to prevent the degradation microbes 3 from being placed under a non-aerobic environment because of water absorbed by the perlite 2, unlike the case wherein the degradation microbes 3 are added to the contaminated soil 1 while being contained by the perlite 2.

Furthermore, according to the method of purifying contaminated soil by microorganisms in the present embodiment, aeration is performed for the contaminated soil 1, so that the above aerobic environment is formed with greater certainty. This makes it possible to further enhance the degradation efficiency of trichloroethylene, the contaminant.

Furthermore, according to the method of purifying contaminated soil by microorganisms in the present embodiment, an inorganic soil-improving material is used as the soil-improving material. This removes the concern that the contaminants would become degraded over a period of years, causing subsidence of ground.

Furthermore, according to the method of purifying contaminated soil by microorganisms in the present embodiment, the inorganic soil-improving material is the perlite 2. This makes it possible to securely form an aerobic environment.

Furthermore, according to the method of purifying contaminated soil by microorganisms in the present embodiment, neither water nor burnt lime is used to purify trichloroethylene, unlike in the conventional method. Thus, post-treatment such as the treatment of slurry or pH adjustment is not required, so that the purification process can immediately proceed to the next step of, for example, returning the soil. This makes it possible to perform soil purification within a short treatment period without fear of causing undue impact on the environment.

In the present embodiment, the contaminant is trichloroethylene, but target contaminants are not limited thereto. The present invention can be applied to any contaminants that can be microbially degraded under an aerobic environment. In addition, an optimum degradation microbe may be selected according to the relevant contaminant.

Furthermore, in the present embodiment, the degradation microbes 3 are added to the contaminated soil 1 while not being contained by perlite 2, the soil-improving material. However, if there is no concern that the degradation microbes 3 contained by the perlite 2 are placed under a non-aerobic environment because of the presence of water, the degradation microbes 3 may be added to the contaminated soil 1 while being contained by the perlite 2.

Furthermore, in the present embodiment, aeration is performed for the contaminated soil 1 when trichloroethylene, the contaminant, is microbially degraded. However at this stage, a certain aerobic environment has already been formed. This is because the gas phase rate of the contaminated soil 1 has been significantly improved by the above action of perlite 2, the soil-improving material.

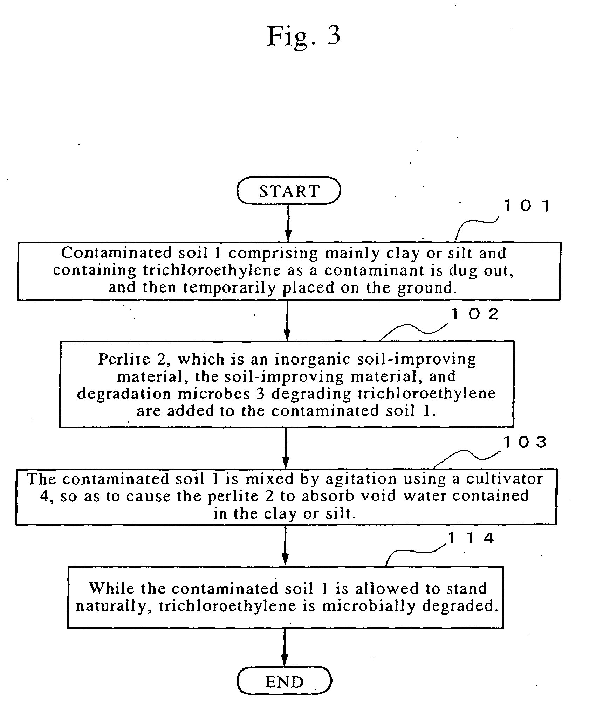

Hence, depending on the situation, aeration of the contaminated soil 1 may be omitted. Trichloroethylene may be microbially degraded while allowing the contaminated soil 1 to stand naturally as shown in Fig. 3 (step 114). In addition, in such a modified example, steps 101 to 103 of the steps before step 114 are similar to those of the above embodiment and the explanation of these steps is omitted here.

Furthermore, in the present embodiment, the contaminated soil 1 is dug out once and then temporarily placed on the ground. Instead, the dug out contaminated soil 1 may be put in a container, followed by treatment similar to the above method. In such a case, volatilization of trichloroethylene can be prevented.

Specifically, for example, a mixer similar to the one used to knead concrete materials may be prepared, and contaminated soil may be introduced into the mixer. Subsequently, degradation microbes and soil-improving materials may be added into the mixer, and then mixed by agitation. The soil may then be spread and smoothed to have an appropriately uniform thickness on the ground. Microbial degradation may be performed while allowing the soil to stand naturally, or by performing forced aeration.

In the meantime, when trichloroethylene is present exclusively on the ground surface of contaminated soil, soil-improving materials and degradation microbes may be added to the ground, and then mixed by agitation using a cultivator. Next, microbial degradation may be performed while preventing volatilization by placing a volatilization-preventing sheet such as a vinyl sheet over the ground, and performing aeration if necessary.

Furthermore, in the present embodiment, degradation microbes 3 are individually added to the contaminated soil 1. However, if it is possible to use soil microbes inhabiting the contaminated soil 1 can be used as degradation microbes, there is no need to further add the degradation microbes 3.

### [Example]

An experiment was conducted to demonstrate the operation and effect of the present invention. The outline of the experiment is as described below.

First, trichloroethylene was used as a contaminant, and then contaminated soil mainly comprising fine-grained soil with a water content ratio of 70% was prepared. Next, the strain MO7 as a trichloroethylene-degrading microbe and perlite as a soil-improving material were both added to the thus prepared contaminated soil, and then the soil was mixed by agitation using a Hobert mixer for 15 seconds.

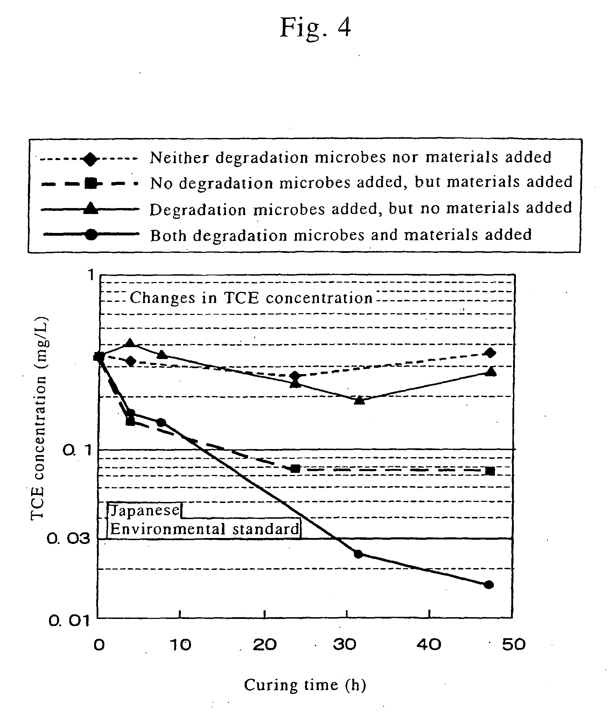

Fig.4 is a graph showing the results of examining decreases in the concentration of trichloroethylene, wherein the time elapsed after the completion of mixing by agitation (curing time) is plotted on the horizontal axis, and the trichloroethylene concentration is plotted on the longitudinal axis. In addition, in this experiment, aeration to inject air into contaminated soil is not performed.

Fig. 4 also shows the result of a case where degradation microbes and/or soil-improving materials were not added. As shown in this figure, when neither degradation microbes nor soil-improving materials were added, the concentration of trichloroethylene barely changed. In addition, when only degradation microbes were added, almost no change was found in the concentration of trichloroethylene. This may be caused by the fact that the activity of degradation microbes could not be enhanced without soil-improving materials.

Next, when only soil-improving materials were added, trichloroethylene could be purified to some extent. This may be caused by the fact that even when trichloroethylene-degrading microbes were not added, the gas phase rate in the contaminated soil 1 was improved by water absorbance by the soil-improving materials so as to improve air permeability, whereby trichloroethylene was volatilized. When both soil-improving materials and trichloroethylene-degrading microbes were added, trichloroethylene was rapidly degraded. Thirty hours later, the trichloroethylene concentration was below the Japanese environmental standard of trichloroethylene concentration.

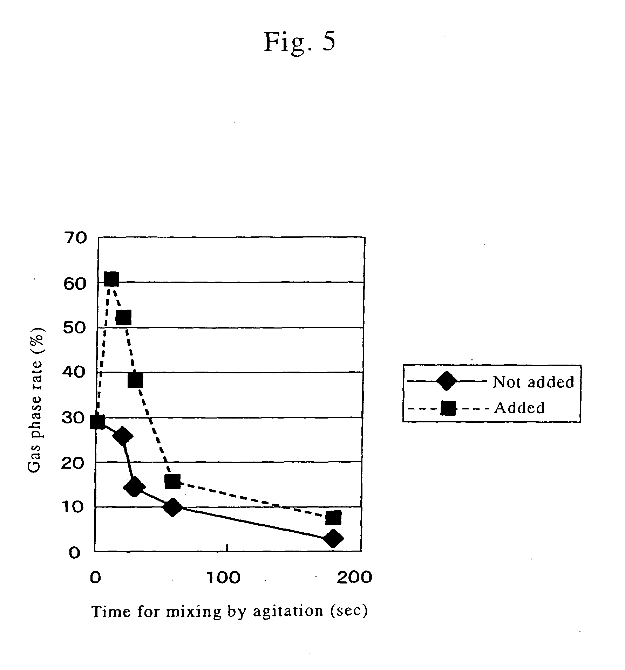

Fig. 5 is a graph wherein the time of mixing by agitation is plotted on the horizontal axis and the gas phase rate is plotted on the longitudinal axis. As shown in Fig. 5, whereas the gas phase rate decreased as the soil was mixed by agitation when no soil-improving materials were added, the gas phase rate that was merely 30% at first increased to 60% when the soil-improving materials were added. This may be caused as follows. The water content ratio of the clay or silt decreased due to the water-absorbing action of the soil-improving materials, so that the clay or silt changed from having the property of a plastic body to having the property of a non-plastic semisolid. Moreover, clods of the clay or silt were peptized apart by mixing the soil by agitation under such circumstances, so that the soil structure changes from an initial small crumbed structure to a larger crumbed structure. Along with this change, larger voids came to be formed. Together with the above-described vacant spaces secured by the absorbance of pore water, the gas phase rate within the clay or silt was greatly improved.

In addition, it was shown that the gas phase rate reached its maximum value within approximately 10 seconds after the start of mixing by agitation, and then decreased again. This may be caused by the fact that the crumbed structure enlarged by mixing the soil by agitation had changed again to a small crumbed structure, leaving fewer vacant spaces.

### Industrial Applicability

As described above, according to the method of purifying contaminated soil by microorganisms of the present invention, pore water in the clay or silt is absorbed by soil-improving materials. Through this process the water content ratio of the entirety of the contaminated soil does not change, but the water content ratio of the clay or silt itself decreases, so that the clay or silt changes from having the property of a plastic body to having the property of a non-plastic semisolid. Moreover, clods of the clay or silt are peptized apart by mixing the soil by agitation under such circumstances, so that the soil structure changes from an initial small crumbed structure to a larger crumbed structure. Along with this change, larger voids come to be formed.

Together with the above-described vacant spaces secured by the absorbance of pore water, the gas phase rate within the clay or silt is greatly improved. Thus, an aerobic environment is formed within the contaminated soil, and it becomes possible to rapidly degrade contaminants contained in the contaminated soil by degradation enzymes of the degradation microbes.

## Claims

1. A method of purifying contaminated soil by microorganisms, comprising the steps of:
adding a soil-improving material having water-absorbing properties and being capable of maintaining a non-swelling property and non-viscosity after water absorption to contaminated soil containing clay or slit, followed by mixing the soil by agitation; and degrading contaminants;
**characterized in that**
degrading is effected by adding microbes that degrade the contaminants to the contaminated soil and/or utilizing degradation microbes inhabiting the contaminated soil; and
**in that** the degradation microbes and the soil-improving material are separately added to the contaminated soil.

2. The method of purifying contaminated soil by microorganisms according to claim 1, wherein aeration is performed for the contaminated soil in the step of degrading the contaminants.

3. The method of purifying contaminated soil by microorganisms according to claim 1 or 2, wherein the soil-improving material mainly comprises an inorganic soil-improving material.

4. The method of purifying contaminated soil by microorganisms according to claim 3, wherein the inorganic soil-improving material is perlite.

## Patentansprüche

1. Verfahren zur Reinigung kontaminierten Bodens durch Mikroorganismen, welches die folgenden Schritte umfasst:
Zugeben eines bodenverbessernden Materials mit wasserabsorbierenden Eigenschaften, das in der Lage ist, nach der Wasserabsorption nicht-quellend und nichtviskos zu bleiben, zu kontaminiertem Boden, der Ton oder Schluff enthält, gefolgt vom Mischen des Bodens durch Bewegung und Abbauen der Kontaminanten;
**dadurch gekennzeichnet, dass**
der Abbau durch Zugabe von Mikroben, welche die Kontaminanten abbauen, zum kontaminierten Boden und/oder unter Verwendung von abbauenden Mikroben, welche den kontaminierten Boden bewohnen, bewirkt wird; und
die abbauenden Mikroben und das bodenverbessernde Material dem kontaminierten Boden getrennt zugegeben werden.

2. Verfahren zur Reinigung kontaminierten Bodens durch Mikroorganismen nach Anspruch 1, wobei im Schritt des Abbauens der Kontaminanten eine Belüftung des kontaminierten Bodens durchgeführt wird.

3. Verfahren zur Reinigung kontaminierten Bodens durch Mikroorganismen nach Anspruch 1 oder 2, wobei das bodenverbessernde Material hauptsächlich ein anorganisches bodenverbesserndes Material umfasst.

4. Verfahren zur Reinigung kontaminierten Bodens durch Mikroorganismen nach Anspruch 3, wobei es sich bei dem bodenverbessernden Material um Perlit handelt.

## Revendications

1. Procédé de purification d'un sol contaminé par des microorganismes, comprenant les étapes consistant à :
ajouter un matériau d'amélioration du sol ayant des propriétés d'absorption de l'eau et étant capable de maintenir une propriété de non gonflement et de non viscosité après absorption de l'eau dans le sol contaminé contenant de l'argile ou du limon, puis à mélanger le sol par agitation, et à dégrader les contaminants ;
**caractérisé en ce que**
la dégradation est effectuée par ajout de microorganismes qui dégradent les contaminants du sol contaminé et/ou par utilisation de microorganismes de dégradation résidant dans le sol contaminé ; et
**en ce que** les microorganismes de dégradation et le matériau d'amélioration du sol sont ajoutés séparément au sol contaminé.

2. Procédé de purification d'un sol contaminé par des microorganismes selon la revendication 1, dans lequel l'aération est effectuée pour le sol contaminé dans l'étape de dégradation des contaminants.

3. Procédé de purification d'un sol contaminé par des microorganismes selon la revendication 1 ou 2, dans lequel le matériau d'amélioration du sol comprend principalement un matériau d'amélioration du sol inorganique.

4. Procédé de purification d'un sol contaminé par des microorganismes selon la revendication 3, dans lequel le matériau d'amélioration du sol inorganique est la perlite.
